Europäisches Patentamt

European Patent Office

Office européen des brevets

(19)

(11) Publication number: **0 141 576**
**B1**

(12) **EUROPEAN PATENT SPECIFICATION**

(45) Date of publication of patent specification: **18.10.89**

(51) Int. Cl.⁴: **B 23 C 5/20**

(21) Application number: **84307107.7**

(22) Date of filing: **17.10.84**

(54) **Cutter blade.**

(30) Priority: **21.10.83 US 544134**

(43) Date of publication of application:
**15.05.85 Bulletin 85/20**

(45) Publication of the grant of the patent:
**18.10.89 Bulletin 89/42**

(84) Designated Contracting States:
**DE FR GB SE**

(56) References cited:
**EP-A-0 094 921**
**DE-A-1 602 795**
**FR-A-2 118 664**
**FR-A-2 268 589**
**FR-A-2 431 897**
**GB-A-1 296 206**
**GB-A-2 103 967**
**US-A-4 140 431**

(73) Proprietor: **DIJET INDUSTRIAL CO., LTD.**
**One Kami-Higashi 2-Chome**
**Hirano-Ku Osaka 547 (JP)**

(72) Inventor: **Lacey, Ralph Warren**
**1434 Berkshire**
**Grosse Pointe Michigan (US)**

(74) Representative: **Robinson, Anthony John**
**Metcalf et al**
**Kilburn & Strode 30 John Street**
**London, WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a cutter blade for milling cutters, and more particularly notched milling cutter blades and a cutter assembly incorporating such blades.

Notched milling cutting blades are known to be useful for high speed machining operations. Notched blades make smaller chips, reduce pressures and require less power (horsepower). With such blades, however, it is preferable to use positive axial rake in order to obtain proper chip flow and avoid damage by the chips to the blade, cutter, and workpiece. Negative axial rake tends to undesirably retain chips in the cutter chip slot, to the detriment of the workpiece and the cutter. Positive radial rake used in combination with negative axial rake amplifies this detrimental tendency.

Yet, it has been determined that the use of negative axial rake with positive radial rake can effect better cutting action. The problem is to obtain good chip removal while doing this. If negative radial rake is empoyed, then negative axial rake is normally used to encourage chip discharge as much as possible.

Another difficulty found to exist when attempts are made to use a notched blade at a rake angle is the interference resulting between a lateral wall of each notch and the corresponding rib which remains on the workpiece as the notched cutting edge moves along the workpiece.

For the designated States France, Germany and the United Kingdom, EP-A-094 921, which falls within the terms of Art. 54(3) EPC, represents the closest art. This shows a milling cutter assembly, orientated to rotate about an axis disposed generally perpendicular to the direction of cutter feed and having a cutter body comprising a plurality of insert blade stations spaced apart about its periphery, a plurality of cutter blades mounted in the blade stations, at least one of the cutter blades having a blade body with a pair of opposite side faces, a plurality of peripheral edge surfaces, and a cutting edge formed at the juncture of at least one of the peripheral edge surfaces with one of said side faces, the cutting edge being oriented at an acute axial rake angle to the axis of the cutter body, the blade also including a plurality of laterally spaced apart notches extending through said cutting edge, the notches being defined by opposite sidewalls that diverge away from the cutting edge, each of said notch sidewalls being disposed at a small acute recession angle to a plane normal to the cutting edge, the assembly being arranged so that, during cutting of a workpiece, a plurality of corresponding upstanding ribs are formed in the operating surface of the workpiece, the ribs being removed by a subsequent one of the cutter blades before a subsequent pass of the said one cutter blade through the workpiece.

According to a first aspect of the invention, a milling cutter assembly has notch side walls which do not abut the ribs as the cutter blade cuts through the operating surface of the workpiece.

The same document further shows that it is known to provide a milling cutter assembly comprising a cutter having a plurality of blade stations positioned around its periphery, the blade stations including a blade-receiving slot defined by a base surface and a back surface, at least one cutter blade having opposite side faces and a plurality of peripheral edge surfaces, one of the said side faces intersecting a first peripheral edge surface to form a cutting edge, and the other of the side faces intersecting a second peripheral edge surface at an acute angle to form a mounting edge located opposite the cutting edge, the said cutter blades being received within the blade-receiving slot with the other side face abutting the base surface of the slot.

According to a second aspect of the invention, a milling cutter assembly includes the features that the back surface of the slot is convex and generally V-shaped, and comprises an inner reference surface and an outer reference surface, with the inner reference surface intersecting the base surface at an acute angle substantially commensurate with the angle of the mounting edge of the cutter blade, the second peripheral edge surface being concave and V-shaped, and comprising an inner edge portion and an outer edge portion mutually intersecting at an angle greater than that of the V-shaped back surface of the slot, and the blade being so positioned that the inner edge portion abuts the inner reference surface of the slot with the outer edge portion being spaced from the outer reference surface of the slot.

This document also shows that it is known to provide a cutter assembly comprising: a cutter body of generally cylindrical configuration, having a plurality of blade-receiving pockets around its periphery and axially spaced along its length; a plurality of like blades in the pockets, each blade having a cutter edge oriented generally axially of the cutter body, the cutting edge having like notches therealong.

According to a third aspect of the invention, a milling cutter assembly has pockets which are axially spaced to cause the blade notches in circumferentially successive blades to be unaligned with each other.

For the designated State Sweden, the closest prior art is represented by US-A-4140431 and FR-A-2431897. The former describes a milling cutter assembly, orientated to rotate about an axis disposed generally prependicular to the direction of cutter feed and having a cutter body comprising a plurality of insert blade stations spaced apart about its periphery, a plurality of cutter blades mounted in the blade stations, at least one of the cutter blades having a blade body with a pair of opposite side faces, a plurality of peripheral edge surfaces, and a cutting edge formed at the juncture of at least one of the peripheral edge surfaces with one of said side faces, the cutting edge being oriented at an acute axial rake angle to the axis of the cutter body, the blade also including a plurality of laterally spaced apart notches extending through said cutting edge.

According to a first aspect of the invention, a milling cutter assembly is characterised in that the notches are defined by opposite sidewalls that diverge away from the cutting edge, each of said notch sidewalls being disposed at a small acute recession angle to a plane normal to the cutting edge, the assembly being arranged so that, during cutting of a workpiece, a plurality of corresponding upstanding ribs are formed in the operating surface of the workpiece, the ribs being removed by a subsequent one of the cutter blades before a subsequent pass of the said one cutter blade through the workpiece, and so that the notch sidewalls do not abut the ribs as the cutter blade cuts through the operating surface of the workpiece.

The same document also shows that it is known to provide a milling cutter assembly comprising a cutter having a plurality of blade stations positioned around its periphery, the blade stations including a blade-receiving slot defined by a base surface and a back surface, at least one cutter blade having opposite side faces and a plurality of peripheral edge surfaces, one of the said side faces intersecting a first peripheral edge surface to form a cutting edge, and the other of the side faces intersecting a second peripheral edge surface at an acute angle to form a mounting edge located opposite the cutting edge, the said cutter blade being received within the blade-receiving slot with the other side face abutting the base surface of the slot.

According to a second aspect of the invention, a milling cutter assembly is characterised in that the back surface of the slot is convex and generally V-shaped, and comprises an inner reference surface and an outer reference surface, with the inner reference surface intersecting the base surface at an acute angle substantially commensurate with the angle of the mounting edge of the cutter blade, the second peripheral edge surface being concave and V-shaped, and comprising an inner edge portion and an outer edge portion mutually intersecting at an angle greater than that of the V-shaped back surface of the slot, and the blade being so positioned that the inner edge portion abuts the inner reference surface of the slot with the outer edge portion being spaced from the outer reference surface of the slot.

FR-A-2431897 describes a cutter assembly comprising: a cutter body of generally cylindrical configuration, having a plurality of blade receiving pockets around its periphery and axially spaced along its length; a plurality of like blades in the pockets, each blade having a cutting edge oriented generally axially of the cutter body, the cutting edge having like notches therealong.

According to a third aspect of the invention, a milling cutter assembly is characterised by the pockets being axially spaced to cause the blade notches in circumferentially successive blades to be unaligned with each other.

Thus, the cutter blade comprises a blade body having a pair of opposite side faces and a plurality of peripheral edge surfaces; a cutting edge formed at the juncture of at least one of the edge surfaces with one of the side faces; the one edge surface being of concave and generally V-shaped configuration such that the juncture is at an acute angle.

The cutter blade may comprise a blade body having a pair of opposite side faces and a plurality of peripheral edge surfaces; a cutting edge formed at the juncture of at least one of the edge surfaces with one of the side faces; a plurality of spaced notches in the blade body, extending through the one edge surface and through the one side face to cause notches in the cutting edge; at least one of the side walls of each of the notches at one side face to be divergent relative to the other side wall, away from the cutting edge.

These embodiments may be combined.

A preferred embodiment provides a cutter blade in which the side walls of the notches at one side face are divergent relative to each other, away from the cutting edge, and preferably at least one, more preferably both, side wall is at a small acute recession angle (B) to a plane normal to the cutting edge. Preferably a cutter blade is provided in which the junctures of two opposite edge surfaces with the side faces form cutting edges, both the opposite edge surfaces being concave, generally V-shaped in configuration to cause all of the junctures to be at an acute angle (B). The acute recession angle is conveniently in the range of 3 to 20°. The acute recession angle is preferably slightly larger than the axial rake angle.

The cutter assembly may comprise a cutter body having a plurality of spaced insert blade stations around its periphery; the stations each including a blade receiving slot; characterised by a convex generally V-shaped back surface in the slot, one portion thereof forming an inner reference surface for a blade; a plurality of blades in the station slots, the blades being as claimed in any one of the preceding claims, one of the edge surfaces of the blade having a portion of the V in a reference engagement with a cutter body reference surface portion, and the other portion of the V spaced slightly from the convex generally V-shaped back surface.

The cutter assembly may comprise a cutter body of generally cylindrical configuration, having a plurality of blade receiving pockets around its periphery and axially spaced along its length; a plurality of like blades in the pockets, each blade having a cutting edge oriented generally axially of the cutter body, the cutting edge having like notches therealong; characterised by the pockets being axially spaced to cause the blade notches in circumferentially successive blades to be unaligned with each other.

These versions may conveniently be combined.

An assembly according to the present invention has the blades at a negative axial rake or at a positive radial rake in a preferred embodiment.

A cutter blade according to the present invention enables high speed cutting by a notched cutter blade at selected axial and radial rakes, even at rakes that are the reverse of what are normally employed, i.e. enabling effective cutting at a negative axial rake and a positive radial rake. The cutter can also be employed with other rake combinations, negative or positive, as desired for the particular job.

The blade may have concave, generally V-shaped front and rear edge surfaces. This V configuration at the front edge surface assists in chip movement into the chip pocket for effective chip removal from the cutter. At the rear edge surface, on portion of the V can abut a like oriented reference surface of a convex V-shaped back surface in the slot of the cutter body, while the other portion of this rear edge surface is at a slight clearance from the slot back surface.

A blade having specially configured cutting edge notches may be provided. These notches, which extend from the front edge surface through the adjacent side face, have lateral walls which diverge away from the cutting edge at an acute angle, achieving clearance from the workpiece rib left by the notch, whether the blade is operated at a positive or a negative axial rake.

If the blades are mounted around the periphery and along the axial length of a cylindrical cutter body, the like notched blades are also preferably mounted in axially offset blade pockets to cause the blade notches of circumferentially sequential blades to be unaligned with each other. This eliminates the need for different notch patterns on the blades, i.e. they can all be alike.

The invention may be put into practice in various ways but two cutter assemblies and a blade according to the present invention will now be described by way of example with reference to the accompanying drawings, in which:

Figure 1 is a side elevational view of a milling cutter assembly;

Figure 2 is an end elevational view of the cutter assembly in Figure 1;

Figure 3 is an expanded elevational view of the periphery of the cutter assembly in Figure 1;

Figure 4 is an enlarged, fragmentary, end elevational view of a second disc-type cutter assembly showing one of the insert blades;

Figure 5 is a fragmentary, side elevational view of the assembly in Figure 4;

Figure 6 is an enlarged, plan view of a cutter blade;

Figure 7 is a side elevational view of the blade in Figure 6;

Figure 8 is an end elevational view of the blade in Figure 6; and

Figure 9 is a diagrammatic fragmentary view illustrating a cutting operation.

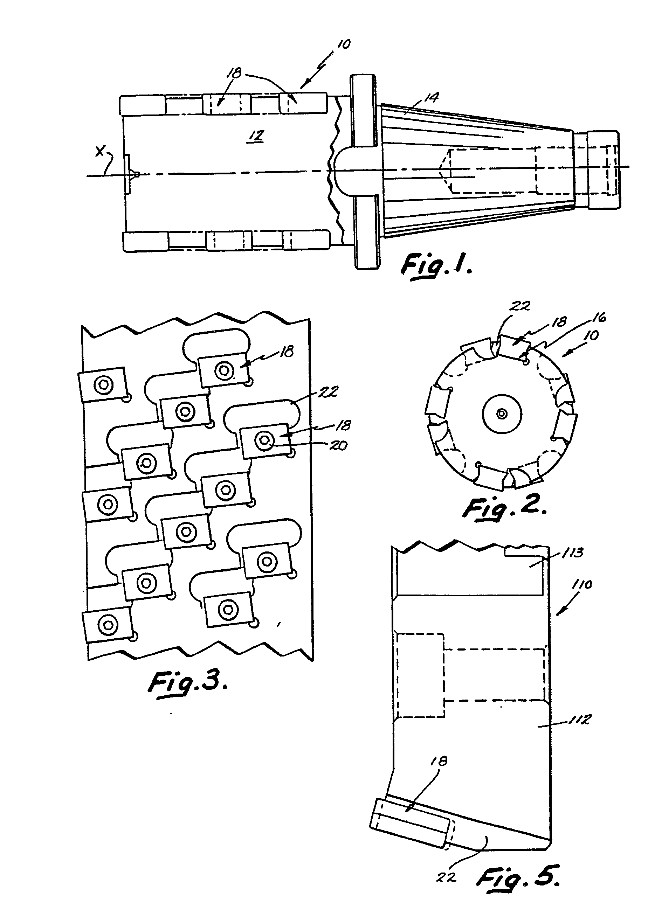

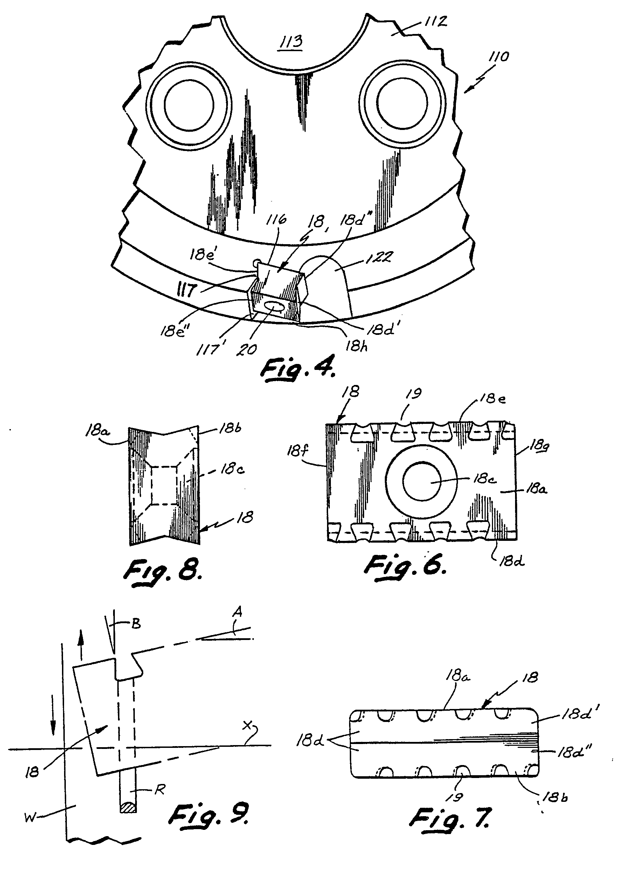

Referring now to the drawings, it will be noted that the first embodiment illustrated in Figures 1 to 3 comprises a cylindrical milling cutter assembly as for surface milling, while the second embodiment in Figures 4 and 5 comprises a disc-type milling assembly. Both of these assemblies are intended to employ blades according to the present invention and one notched cutter blade is shown in Figures 6 to 8, although the notches do not show in Figures 1 to 5. The milling cutter bodies can have either a shank to be received in a bore of a milling machine, or a bore to receive a shank of a milling machine. The embodiment of the invention shown in Figures 1 to 3 comprises a milling cutter assembly 10 having a cylindrical cutter body 12 rotational on its axis X, with a conventional end spindle or shank 14 for mounting in a milling machine. The cutter body 12 has around its periphery and along its axial length a plurality of blade-receiving slots or pockets 16, each to receive an insert blade 18 secured to the body as by a threaded fastener 20 extending through the blade. Each blade receiving pocket has an adjacent, adjoining chip pocket 22 formed into the cutter body to receive the chip from the blade and discharge it.

In the embodiment shown in Figures 1 to 3, the blade pockets are oriented at a small acute angle relative to an imaginary line on the cutter body periphery parallel to the rotational axis of the body. The blade pockets are also axially offset in a pattern such that circumferentially successive blades overlap in a manner to prevent alignment of notches of circumferentially successive blades. Hence the individual blades can have the same notch pattern, i.e. the blades can be identical; yet each blade effectively cuts off the "ribs" left by the notches of the preceding blade.

Each of the blades includes at least one cutting edge formed at the juncture between one of its two flat sides and one of its four edge surfaces. The blade is mounted in the cutter body to cause the cutting edge to project radially outwardly from the cutter body periphery (Figure 2). Each of the blades includes a specially configured front edge surface and rear edge surface to be described in more detail hereinafter. For convenience, these edge surfaces will be described in connection with the embodiment shown in Figures 4 and 5 because these figures most clearly illustrate the relationship thereof to the cutter body.

Referring to Figures 4 and 5, the milling cutter assembly 110 there shown has a disc-type cutter body 112 with a central bore 113 for mounting on a milling machine spindle, and a plurality of blade pockets 116 around its periphery to receive blades 18. Each blade pocket includes an adjoining chip pocket 122 which preferably, but not necessarily, extends through the cutter body from front to back.

Each blade 18, normally formed of a compressed and sintered tungsten carbide material, has a central opening therein for insertion of a threaded mounting fastener 20 (Figures 3 and 4). The polygonal blade (best shown in Figures 6, 7 and 8), here shown to be generally rectangular in shape, has two enlarged side faces 18a and 18b with an opening 18c extending therebetween. This four-sided blade also has four side surfaces including a front edge surface 18d, a back edge surface 18e identical thereto and interchangeable therewith, and two end edge surfaces 18f and 18g. The like front and back edge surfaces are

specially configured. Specifically, each has a concave, generally V-shaped configuration, with the apex of the V being basically at the middle of the edge surface and oriented parallel to the side faces. This V-shaped configuration thus forms two edge surface portions for each of these front and back edge surfaces. These edge surface portions are at an acute angle preferably of about 75° to the adjacent side face. It will be understood that the terms "front" and "back" have relationship to the position of the blade in the cutter body, such that, when the blade is rotated 180°, the front becomes the back and vice versa.

On the front edge surface (see Figure 4 for example), the radially outer edge surface portion 18d' forms a juncture with the outer side face of the blade to create a cutting edge 18h that protrudes beyond the cutter body periphery. The radial inner portion 18d'' of the front edge surface specially cooperates with the adjoining chip pocket 122 in the cutter body. That is, the metal chip severed from the workpiece by the cutting edge curls diagonally along the radial outer portion 18d' of this front edge surface until it reaches the apex in this front edge surface, at which time it is turned back diagonally by the lower portion 18d'', for a smooth flow into the chip pocket 122 where it continues to be curled radially outwardly for complete discharge from the cutter assembly in a smooth action. This shape of the front edge surface of the blade has been found to prevent undue wear on the chip pocket and cutter body. The back edge surface 18e of the blade has the same special configuration as that of the front edge surface. This special configuration serves a different function at the back edge surface, however. The radially inner portion 18e' lies in engagement with a like angulated reference surface portion 117 on a convex, generally V-shaped back surface of the cutter body blade slot. Thus, each blade can be accurately located relative to the cutter body. Moreover, the cutting or machining pressure on the blade tends to maintain the blade in proper positive abutment with this reference surface. The radially outer portion 18e'' of the back edge surface is spaced at a slight clearance from the adjacent radially outer portion 117' of the slot back surface (see Figure 4).

In the particular blade shown, there are four cutting edges, each formed by the juncture of one of the two flat side surfaces with the front and back edge surfaces. These cutting edges are notched, the notches (19) having a special configuration. These notches are shown in Figures 6 and 7 as being four in number in the main portion of the cutting edge, and a fifth notch at the leading corner of the cutting edge. Obviously the number of notches can vary. Each notch extends through the side surface and the adjoining edge surface portion and thus through the juncture therebetween forming the cutting edge.

In the area where each notch extends through the side surface of the blade, the side walls of the notch are divergent away from the cutting edge such that the width of the notch at the cutting edge is smaller than the width of the notch at its base. Each side wall is at an acute recession angle relative to a plane perpendicular to the cutting edge. Usually this acute recession angle is within the range of about 3 to 20°, more typically being about 10°, the minimum angle depending upon the axial rake angle of the blade in the cutter body to be used. That is, the acute recession angle should be larger than the axial rake angle used. Thus, if a 5° negative rake angle of the blade in the cutter body is employed, the acute recession angle of the notch walls should be greater than 5°, to prevent the notch wall from interfering with the wall of the rib which is left on the workpiece as the cutting edge and its notch traverse the workpiece.

In operation, a plurality of the like special blades are inserted in the cutter body pockets and secured in position against the reference surface of the respective pockets such that a cutting edge on each blade protrudes to remove material from the workpiece. The particular blade selected will have an acute recession angle on the side walls of the blade notches at least as large as the axial rake angle of the blade in the cutter body. The blades can accommodate either negative or positive rake because both side walls of each notch recess in the manner indicated. An example of this is shown diagrammatically in Figure 9 wherein W represents a portion of a workpiece, and a portion of the adjacent side face, cutting edge and one notch of blade 18 are shown in phantom lines. The axial rake angle of the blade relative to the cutter body axis X is A. The acute recession angle of each side wall of the notch is B. During cutting, and consequent relative movement between the blade and workpiece as indicated by opposite arrows, each blade notch leaves a rib R on the workpiece. Recession angle B is greater than rake angle A to prevent interference rubbing of a notch wall on rib R which is formed temporarily until removed by the succeeding blade (not shown). In the blade shown in Figure 9 the "left" notch wall requires this acute recession angle for clearance from the rib R. The "right" notch could, in this illustrative example, be normal to the cutting edge, i.e. not recessed, and still have adequate clearance from rib R. However, since the blade could be employed by the ultimate purchaser in a negative or positive rake arrangement, it is preferable to have an acute angle recess on both sides of each notch. Feeding the rotational cutter body relative to the workpiece causes the notched cutting edges to successively remove material from the workpiece, with the notches in each blade leaving a plurality of ribs on the workpiece surface. The successive blade removes the ribs from the preceding blade even though the blades are alike, because the blades are axially offset in the pockets relative to each other so that the notches of circumferentially successive blades are unaligned. The chip of metal being removed by each blade is forced by the radially outer edge surface portion adjacent the cutting edge to travel radially inwardly to the apex of the V configuration, where the chip is turned by the apex of the V into the chip pocket to travel axially out of the cutter without interference with the cutter assembly and operation.

With some milling cutter assemblies, the operator might not use a notched blade in each successive pocket. Specifically, a notched blade might be followed circumferentially by a thin rib removal blade which is unnotched and not as thick as the notched blade it follows. This thin blade serves to cut off the ribs left by the preceding notched blade.

**Claims for the Contracting States: DE FR GB**

1. A milling cutter assembly (110), oriented to rotate about an axis (x) disposed generally perpendicular to the direction of cutter feed and having a cutter body (112) comprising a plurality of insert blade stations (16) spaced apart about its periphery, a plurality of cutter blades (18) mounted in the blade stations, at least one of the cutter blades having a blade body with a pair of opposite side faces (18a, 18b), a plurality of peripheral edge surfaces (18d, 18e, 18f, 18g), and a cutting edge (18h) formed at the juncture of at least one of the peripheral edge surfaces with one of said side faces, the cutting edge being oriented at an acute axial rake angle (A) to the axis of the cutter body, the blade also including a plurality of laterally spaced apart notches (19) extending through said cutting edge, the notches being defined by opposite sidewalls that diverge away from the cutting edge (18h), each of said notch sidewalls being disposed at a small acute recession angle to a plane normal to the cutting edge, the assembly being arranged so that, during cutting of a workpiece (W), a plurality of corresponding upstanding ribs (R) are formed in the operating surface of the workpiece, the ribs being removed by a subsequent one of the cutter blades before a subsequent pass of the said one cutter blade through the workpiece, and wherein the notch sidewalls do not abut the ribs as the cutter blade cuts through the operating surface of the workpiece.

2. A milling cutter assembly as claimed in Claim 1 in which the acute recision angle (B) is in the range of about 3-20 degrees.

3. A milling cutter assembly as claimed in Claim 1 or Claim 2, in which the cutter blade is at a negative axial rake.

4. A milling cutter assembly as claimed in Claim 1 or Claim 2, in which the cutter blade is at a positive radial rake.

5. A milling cutter assembly as claimed in any of the preceding claims in which the said subsequent one of said cutter blades comprises a second one cutter blade mounted in the cutter body in a laterally offset relationship to said one cutter blade.

6. A milling cutting assembly (110) comprising a cutter having a plurality of blade stations (16) positioned around its periphery, the blade stations (16) including a blade-receiving slot (116) defined by a base surface and a back surface (117, 117'), at least one cutter blade (18) having opposite side faces (18a, 18b) and a plurality of peripheral edge surfaces (18d, 18e, 18f, 18g), one (18a) of the said side faces intersecting a first peripheral edge surface (18d) to form a cutting edge (18h), and the other (18b) of the side faces intersecting a second peripheral edge surface 18e at an acute angle to form a mounting edge located opposite the cutting edge (18h), the said cutter blade (18) being received within the blade-receiving slot (116) with the other side face (18b) abutting the base surface of the slot (116); wherein the back surface of the slot is convex and generally V-shaped, and comprises an inner reference surface (117) and an outer reference surface (117'), with the inner reference surface intersecting the base surface at an acute angle substantially commensurate with the angle of the the mounting edge of the cutter blade (18), the second peripheral edge surface (18e) being concave and V-shaped, and comprising an inner edge portion (18e') and an outer edge portion (18e'') mutually intersecting at an angle greater than that of the V-shaped back surface (117, 117') of the slot, and the blade being so positioned that the inner edge portion (18e') abuts the inner reference surface (117) of the slot with the outer edge portion being spaced from the outer reference surface (117') of the slot.

7. A milling cutter assembly as claimed in any one of the preceding claims in which the cutter blade (18) has a symmetrical plane shape and the mounting edge defines a second cutting edge.

8. A milling cutter assembly as claimed in any one of the preceding claims in which the cutter blade retaining means includes a bolt extending radially through said cutter blade, and threaded in the cutter body.

9. A cutter assembly comprising: a cutter body (12, 112) of generally cylindrical configuration, having a plurality of blade receiving pockets (16, 116) around its periphery and axially spaced along its length; a plurality of like blades (18) in the pockets, each blade having a cutting edge (18h) oriented generally axially of the cutter body, the cutting edge having like notches therealong (19); and the pockets (16, 116) being axially spaced to cause the blade notches in circumferentially successive blades to be unaligned with each other.

**Claims for the Contracting State: SE**

1. A milling cutter assembly (110), oriented to rotate about an axis (x) disposed generally perpendicular to the direction of cutter feed and having a cutter body (112) comprising a plurality of insert blade stations (16) spaced apart about its periphery, a plurality of cutter blades (18) mounted in the blade stations, at least one of the cutter blades having a blade body with a pair of opposite side faces (18a, 18b), a plurality of peripheral edge surfaces (18d, 18e, 18f, 18g), and a cutting edge (18h) formed at the juncture of at least one of the peripheral edge surfaces with one of said side faces, the cutting edge being oriented at an acute axial rake angle (A) to the axis of the cutter body, the blade also including a plurality of laterally spaced apart notches (19) extending through said cutting edge, characterised in that the notches are defined by opposite sidewalls that diverge away from the cutting edge (18h), each of said notch sidewalls being disposed at a small acute recession angle to a plane normal to the cutting edge, the assembly being arranged so that, during cutting of a workpiece (W), a plurality of corresponding upstanding ribs (R) are formed in the operating surface of the workpiece, the ribs being removed by a subsequent one of the cutter blades before a subsequent pass of the said one cutter blade through the workpiece, and so that the notch sidewalls do not abut the ribs as the cutter blade cuts through the operating surface of the workpiece.

2. A milling cutter assembly as claimed in Claim 1 in which the acute recision angle (B) is in the range of about 3-20 degrees.

3. A milling cutter assembly as claimed in Claim 1 or Claim 2, in which the cutter blade is at a negative axial rake.

4. A milling cutter assembly as claimed in Claim 1 or Claim 2, in which the cutter blade is at a positive radial rake.

5. A milling cutter assembly as claimed in any of the preceding claims in which the said subsequent one of said cutter blades comprises a second one cutter blade mounted in the cutter body in a laterally offset relationship to said one cutter blade.

6. A milling cutting assembly (110) comprising a cutter having a plurality of blade stations (16) positioned around its periphery, the blade stations (16) including a blade-receiving slot (116) defined by a base surface and a back surface (117, 117'), at least one cutter blade (18) having opposite side faces (18a, 18b) and a plurality of peripheral edge surfaces (18d, 18e, 18f, 18g), one (18a) of the said side faces intersecting a first peripheral edge surface (18d) to form a cutting edge (18h), and the other (18b) of the side faces intersecting a second peripheral edge surface 18e at an acute angle to form a mounting edge located opposite the cutting edge (18h), the said cutter blade (18) being received within the blade-receiving slot (116) with the other side face (18b) abutting the base surface of the slot (116); characterised in that the back surface of the slot is convex and generally V-shaped, and comprises an inner reference surface (117) and an outer reference surface (117'), with the inner reference surface intersecting the base surface at an acute angle substantially commensurate with the angle of the the mounting edge of the cutter blade (18), the second peripheral edge surface (18e) being concave and V-shaped, and comprising an inner edge portion (18e') and an outer edge portion (18e'') mutually intersecting at an angle greater than that of the V-shaped back surface (117, 117') of the slot, and the blade being so positioned that the inner edge portion (18e') abuts the inner reference surface (117) of the slot with the outer edge portion being spaced from the outer reference surface (117') of the slot.

7. A milling cutter assembly as claimed in any one of the preceding claims in which the cutter blade (18) has a symmetrical plane shape and the mounting edge defines a second cutting edge.

8. A milling cutter assembly as claimed in any one of the preceding claims in which the cutter blade retaining means includes a bolt extending radially through said cutter blade, and threaded in the cutter body.

9. A cutter assembly comprising: a cutter body (12, 112) of generally cylindrical configuration, having a plurality of blade receiving pockets (16, 116) around its periphery and axially spaced along its length; a plurality of like blades (18) in the pockets, each blade having a cutting edge (18h) oriented generally axially of the cutter body, the cutting edge having like notches therealong (19); characterised by the pockets (16, 116) being axially spaced to cause the blade notches in circumferentially successive blades to be unaligned with each other.

**Patentansprüche für die Vertragsstaaten: DE FR GB**

1. Fräseranordnung (110), welche für eine Rotation um eine im wesentlichen senkrecht zum Fräsvorschub verlaufende Achse (x) orientiert ist, mit einem Fräserkopf (112), der mehrere, längs seines Umfangs beabstandete Messereinsatzstationen (16) aufweist, einer Mehrzahl von Fräsmessern (18), die in den Messerstationen gehaltert sind und von denen mindestens eines einen Messerkörper mit zwei entgegengesetzten Seitenflächen (18a, 18b), einer Mehrzahl von Umfangsrandflächen (18d, 18e, 18f, 18g) sowie eine Schneidkante (18h) beim Zusammentreffen mindestens einer der Umfangsrandflächen und einer der Seitenflächen aufweist, wobei die Schneidkante in einem spitzen axialen Spanwinkel (a) bezüglich der Achse des Fräserkopfes verläuft und das Messer außerdem mehrere, mit seitlichen Abständen angeordnete Nuten (19) aufweist, die sich durch die Schneidkante erstrecken und durch entgegengesetzte Seitenwände begrenzt sind, welche von der Schneidkante (18h) aus divergieren und jeweils in einem kleinen, spitzen Rücksprungwinkel bezüglich einer zur Schneidkante senkrechten Ebene verlaufen, wobei die Anordnung so ausgebildet ist, daß beim Fräsen eines Werkstückes (W) eine Mehrzahl entsprechender hochstehender Rippen (R) in der Arbeitsfläche des Werkstückes gebildet werden, welche vor dem nächsten Durchgang des betreffenden Fräsmessers durch das Werkstück von einem nachlaufenden Fräsmesser entfernt werden und wobei die Seitenwände der Nuten nicht an die Rippen anstoßen, während das Fräsmesser durch die Arbeitsfläche des Werkstücks schneidet.

2. Fräseranordnung nach Anspruch 1, bei welchem der spitze Rücksprungwinkel (B) im Bereich von etwa 3 bis 20 Grad liegt.

3. Fräseranordnung nach Anspruch 1 oder Anspruch 2, bei welcher das Fräsmesser einen negativen axialen Spanwinkel aufweist.

4. Fräseranordnung nach Anspruch 1 oder 2, bei der das Fräsmesser einen positiven radialen Spanwinkel aufweist.

5. Fräseranordnung nach einem der vorhergehenden Ansprüche bei der das erwähnte nachlaufende Fräsmesser ein zweites solches Fräsmesser ist, welches im Fräserkopf bezüglich des erwähnten einen Fräsmessers seitlich versetzt angeordnet ist.

6. Fräseranordnung (110) mit einem Fräser, welcher eine Mehrzahl von Messerstationen (16) aufweist, die um seinen Umfang herum angeordnet sind und einen Messeraufnahmeschlitz (116) aufweisen, der durch eine Basisfläche und eine Rückfläche (117, 117') begrenzt ist, und mit mindestens einem Fräsmesser (18), welches entgegengesetzte Seitenflächen (18a, 18b) und eine Mehrzahl von Umfangsrandflächen (18d, 18e, 18f, 18g) aufweist, und wobei eine (18a) der Seitenflächen eine erste Umfangsrandfläche (18d) unter Bildung einer Schneidkante (18h) schneidet und die andere (18b) der Seitenflächen eine zweite Umfangsrandfläche (18e) unter einem spitzen Winkel schneidet, um eine der Schneidkante (18h) entgegengesetzte Montagekante zu bilden, und welches (18) vom Messeraufnahmeschlitz (116) so aufgenommen wird, daß die andere Seitenfläche (18b) an der Basisfläche des Schlitzes (116) anliegt; wobei die Rückfläche des Schlitzes konvex sowie im wesentlichen V-förmig ist und eine innere Bezugsfläche (117) sowie eine äußere Bezugsfläche (117') aufweist, von denen die innere Bezugsfläche die Basisfläche unter einem spitzen Winkel schneidet, der im wesentlichen mit dem Winkel der Montagekante des Fräsmessers (18) übereinstimmt, die zweite Umfangsrandfläche (18e) konkav sowie V-förmig ist und einen inneren Randteil (18e') sowie einen äußeren Randteil (18e'') aufweist, die sich unter einem Winkel schneiden, der größer ist als der der V-förmigen Rückfläche (117, 117') des Schlitzes, und das Messer so angeordnet ist, daß der innere Randteil (18e') an der inneren Bezugsfäche (117) des Schlitzes anliegt und der äußere Randteil von der äußeren Bezugsfläche (117') des Schlitzes beabstandet ist.

7. Fräseranordnung nach einem der vorhergehenden Ansprüche, bei welchem das Fräsmesser (18) eine symmetrische ebene Form hat und die Montagekante eine zweite Schneidkante bildet.

8. Fräseranordnung nach einem der vorhergehenden Ansprüche, bei welcher die Fräsmesserhalterungsvorrichtung eine Schraube enthält, die sich radial durch das Fräsmesser erstreckt und in den Fräserkopf eingeschraubt ist.

9. Fräseranordnung mit einem Fräserkopf (12, 112) im wesentlichen zylindrischer Gestalt, der längs seines Umfanges eine Mehrzahl von Messeraufnahmetaschen (16, 116) aufweist, die axial in seiner Längsrichtung beabstandet sind; einer Mehrzahl von gleichen, in den Taschen angeordneten Messern (18), die jeweils eine Schneidkante (18h) aufweisen, die im wesentlichen axial bezüglich des Fräserkopfes verläuft und ihr entlang gleiche Nuten (19) aufweist und wobei die Taschen (16, 116) axial so beabstandet sind, daß die Messernuten in Messern, die in Umfangsrichtung aufeinanderfolgen, nicht miteinander fluchten.

**Patentansprüche für den Vertragsstaat: SE**

1. Fräseranordnung (110), welche für eine Rotation um eine im wesentlichen senkrecht zum Fräsvorschub verlaufende Achse (x) orientiert ist, mit einem Fräserkopf (112), der mehrere, längs seines Umfangs beabstandete Messereinsatzstationen (16) aufweist, einer Mehrzahl von Fräsmessern (18), die in den Messerstationen gehaltert sind und von denen mindestens eines einen Messerkörper mit zwei entgegengesetzten Seitenflächen (18a, 18b), einer Mehrzahl von Umfangsrandflächen (18d, 18e, 18f, 18g) sowie eine Schneidkante (18h) beim Zusammentreffen mindestens einer der Umfangsrandflächen und einer der Seitenflächen aufweist, wobei die Schneidkante in einem spitzen axialen Spanwinkel (a) bezüglich der Achse des Fräserkopfes verläuft und das Messer außerdem mehrere, mit seitlichen Abständen angeordnete Nuten (19) aufweist, die sich durch die Schneidkante erstrecken, dadurch gekennzeichnet, daß die Nuten durch entgegengesetzte Seitenwände begrenzt sind, welche von der Schneidkante (18h) aus divergieren und jeweils in einem kleinen, spitzen Rücksprungwinkel bezüglich einer zur Schneidkante senkrechten Ebene verlaufen, und daß die Anordnung so ausgebildet ist, daß beim Fräsen eines Werkstückes (W) eine Mehrzahl entsprechender hochstehender Rippen (R) in der Arbeitsfläche des Werkstückes gebildet werden, welche vor dem nächsten Durchgang des betreffenden Fräsmessers durch das Werkstück von einem nachlaufenden Fräsmesser entfernt werden und so, daß die Seitenwände der Nuten nicht an die Rippen anstoßen, während das Fräsmesser durch die Arbeitsfläche des Werkstücks schneidet.

2. Fräseranordnung nach Anspruch 1, bei welchem der spitze Rücksprungwinkel (B) im Bereich von etwa 3 bis 20 Grad liegt.

3. Fräseranordnung nach Anspruch 1 oder Anspruch 2, bei welcher das Fräsmesser einen negativen axialen Spanwinkel aufweist.

4. Fräseranordnung nach Anspruch 1 oder 2, bei der das Fräsmesser einen positiven radialen Spanwinkel aufweist.

5. Fräseranordnung nach einem der vorhergehenden Ansprüche, bei der das erwähnte nachlaufende Fräsmesser ein zweites solches Fräsmesser ist, welches im Fräserkopf bezüglich des erwähnten einen Fräsmessers seitlich versetzt angeordnet ist.

6. Fräseranordnung (110) mit einem Fräser, welcher eine Mehrzahl von Messerstationen (16) aufweist, die um seinen Umfang herum angeordnet sind und einen Messeraufnahmeschlitz (116) aufweisen, der durch eine Basisfläche und eine Rückfläche (117, 117') begrenzt ist, und mit mindestens einem Fräsmesser (18), welches entgegengesetzte Seitenflächen (18a, 18b) und eine Mehrzahl von Umfangsrandflächen (18d, 18e, 18f, 18g) aufweist, und wobei eine (18a) der Seitenflächen eine erste Umfangsrandfläche (18d) unter Bildung einer Schneidkante (18h) schneidet und die andere (18b) der Seitenflächen eine zweite Umfangsrandfläche (18e) unter einem spitzen Winkel schneidet, um eine der Schneidkante (18h) entgegengesetzte Montagekante zu bilden, und welches (18) vom Messeraufnahmeschlitz (116) so aufgenommen wird, daß die andere Seitenfläche (18b) an der Basisfläche des Schlitzes (116) anliegt; dadurch gekennzeichnet, daß die Rückfläche des Schlitzes konvex sowie im wesentlichen V-förmig ist und eine innere Bezugsfläche (117) sowie eine äußere Bezugsfläche (117') aufweist, von denen die innere Bezugsfläche die Basisfläche unter einem spitzen Winkel schneidet, der im wesentlichen mit dem Winkel der Montagekante des Fräsmessers (18) übereinstimmt, die zweite Umfangsrandfläche (18e) konkav sowie V-förmig ist und einen inneren Randteil (18e') sowie einen äußeren Randteil (18e'') aufweist, die sich unter einem Winkel schneiden, der größer ist als der der V-förmigen Rückfläche (117, 117') des Schlitzes, und daß das Messer so angeordnet ist, daß der innere Randteil (18e') an der inneren Bezugsfäche (117) des Schlitzes anliegt und der äußere Randteil von der äußeren Bezugsfläche (117') des Schlitzes beabstandet ist.

7. Fräseranordnung nach einem der vorhergehenden Ansprüche, bei welchem das Fräsmesser (18) eine symmetrische ebene Form hat und die Montagekante eine zweite Schneidkante bildet.

8. Fräseranordnung nach einem der vorhergehenden Ansprüche, bei welcher die Fräsmesserhalterungsvorrichtung eine Schraube enthält, die sich radial durch das Fräsmesser erstreckt und in den Fräserkopf eingeschraubt ist.

9. Fräseranordnung mit einem Fräserkopf (12, 112) im wesentlichen zylindrischer Gestalt, der eine Mehrzahl von Messeraufnahmetaschen (16, 116) längs seines Umfanges aufweist, die axial in seiner Längsrichtung beabstandet sind; einer Mehrzahl von gleichen, in den Taschen angeordneten Messern (18), die jeweils eine Schneidkante (18h) aufweisen, die im wesentlichen axial bezüglich des Fräserkopfes verläuft und gleiche Nuten (19) ihr entlang aufweist, dadurch gekennzeichnet, daß die Taschen (16, 116) axial so beabstandet sind, daß die Messernuten in Messern, die in Umfangsrichtung aufeinanderfolgen, nicht miteinander fluchten.

**Revendications pour les Etats contractants: DE FR GB**

1. Ensemble fraise (110), orienté pour tourner autour d'un axe (x) disposé sensiblement perpendiculairement à la direction de l'avance de la fraise et possédant un corps de fraise (112) qui comprend luimême une pluralité de stations de lames rapportées (16) espacées le long de sa périphérie, une pluralité de lames de fraise (18) montées dans les stations de lames, au moins une des lames de la fraise comprenant un corps de lame qui présente une paire de faces latérales opposées (18a, 18b), une pluralité de surfaces de chants périphériques (18d, 18e, 18f, 18g), et une arête tranchante (18h) formée à la jonction entre au moins l'une des surfaces de chants périphériques et une desdites faces latérales, l'arête tranchante étant orientée selon un angle d'attaque aigu (A) dans la direction axiale par rapport à l'axe du corps de fraise, ladite lame comprenant en outre une pluralité d'encoches (19) espacées selon la direction latérale, qui traversent ladite arête tranchante, lesdites encoches étant définies par des flancs opposés qui divergent à partir de l'arête tranchante (18h), chacun desdits flancs des encoches étant disposé en formant un petit angle aigu de contre-dépouille avec un plan perpendiculaire à l'arête tranchante, l'ensemble étant agencé de manière que, pendant le fraisage d'une pièce (W), il se forme une pluralité de nervures saillantes correspondantes (R) dans la surface travaillée de la pièce, lesdites nervures étant enlevées par l'une des lames suivantes de la fraise avant le passage suivant de la lame considérée de la fraise dans la pièce, et de telle manière que les flancs des encoches ne butent pas contre les nervures lorsque la lame de fraise taille dans la surface travaillée de la pièce.

2. Ensemble fraise selon la revendication 1, dans lequel l'angle aigu de contre-dépouille (B) est dans l'intervalle d'environ 3 à 20 degrés.

3. Ensemble fraise selon la revendication 1 ou la revendication 2, dans lequel la lame de fraise est orientée selon un angle de coupe négatif dans la direction axiale.

4. Ensemble fraise selon la revendication 1 ou la revendication 2, dans lequel la lame de fraise est orientée selon un angle de coupe positif dans la direction radiale.

5. Ensemble fraise selon une quelconque des revendications précédentes, dans lequel ladite lame suivante de la fraise est constituée par une deuxième lame de fraise montée dans le corps de la fraise dans une position relative décalée latéralement par rapport à ladite lame considérée de la fraise.

6. Ensemble fraise (110), comprenant une fraise possédant une pluralité de stations de lames (16) disposées autour de sa périphérie, les stations de lames (16) comprenant une fente de logement de lame (16) définie par une surface de base et une surface arrière (117, 117'), au moins une lame de fraise (18) possédant des faces latérales opposées (18a, 18b) et une pluralité de surfaces de chants périphériques (18d, 18e, 18f, 18g), une (18a) desdites faces latérales coupant une première surface de chant périphérique (18d) pour former une arête tranchante (18h), et l'autre (18b) des faces latérales coupant une deuxième surface de chant périphérique (18e) selon un angle aigu pour former une arête de montage située à l'opposé de l'arête tranchante (18h), ladite lame de fraise (18) étant logée dans la fentede logement de lame (116) de façon que l'autre face latérale (18b) s'appuie contre la surface de base de la fente (116); dans lequel la surface arrière de la fente est convexe avec la forme générale d'un V, et comprend une surface intérieure de référence (117) et une surface extérieure de référence (117'), la surface intérieure de référence (117) coupant la surface de base selon un angle aigu sensiblement de même valeur que l'angle de l'arête de montage de la lame de fraise (18), la deuxième surface de chant périphérique (18e) étant concave et en forme de V, et comprenant une portion intérieure de chant (18e') et une portion extérieure de chant (18e''), qui se coupent mutuellement selon un angle supérieur à celui de la surface arrière en forme de V (117, 117') de la fente, et la lame étant positionnée de manière que la portion intérieure de chant (18e') bute contre la surface intérieure de référence (117) de la fente, la portion extérieure de chant étant quant à elle espacée de la surface extérieure de référence (117') de la fente.

7. Ensemble fraise selon une quelconque des revendications précédentes, dans lequel la lame de fraise (18) présente une forme plane symétrique, et l'arête de montage définit une deuxième arête tranchante.

8. Ensemble fraise selon une quelconque des revendications précédentes, dans lequel les moyens de retenue de la lame de fraise comprennent une vis qui traverse radialement ladite lame de fraise et est vissée dans le corps de la fraise.

9. Ensemble fraise comprenant: un corps de fraise (12, 112) de configuration généralement cylindrique, qui présente une pluralité de poches (16, 116) de logement des lames, réparties sur le tour de sa périphérie et espacées axialement sur sa longueur; une pluralité de lames analogues (18) logées dans les poches, chaque lame possédant une arête tranchante (18h) orientée dans la direction générale axiale du corps de la fraise, l'arête tranchante présentant des encoches analogues sur sa longueur (19); et les poches (16, 116) étant espacées axialement de manière que les encoches des lames qui se suivent dans une direction circonférentielle soient désalignées les unes par rapport aux autres.

**Revendications pour l'Etat contractant: SE**

1. Ensemble fraise (110), orienté pour tourner autour d'un axe (x) disposé sensiblement perpendiculairement à la direction de l'avance de la fraise et possédant un corps de fraise (112) qui comprend luimême une pluralité de stations de lames rapportées (16) espacées le long de sa périphérie, une pluralité de lames de fraise (18) montées dans les stations de lames, au moins une des lames de la fraise comprenant un corps de lame qui présente une paire de faces latérales opposées (18a, 18b), une pluralité de surfaces de chants périphériques (18d, 18e, 18f, 18g), et une arête tranchante (18h) formée à la jonction entre au moins l'une des surfaces de chants périphériques et une desdites faces latérales, l'arête tranchante étant orientée selon un angle d'attaque aigu (A) dans la direction axiale par rapport à l'axe du corps de fraise, ladite lame comprenant en outre une pluralité d'encoches (19) espacées selon la direction latérale, qui traversent ladite arête tranchante, caractérisé en ce que les encoches sont définies par des flancs opposés qui divergent à partir de l'arête tranchante (18h), chacun desdits flancs des encoches étant disposé en formant un petit angle aigu de contre-dépouille avec un plan perpendiculaire à l'arête tranchante, l'ensemble étant agencé de manière que, pendant le fraisage d'une pièce (W), il se forme une pluralité de nervures saillantes correspondantes (R) dans la surface travaillée de la pièce, lesdites nervures étant enlevées par l'une des lames suivantes de la fraise avant le passage suivant de la lame considérée de la fraise dans la pièce, et de telle manière que les flancs des encoches ne butent pas contre les nervures lorsque la lame de fraise taille dans la surface travaillée de la pièce.

2. Ensemble fraise selon la revendication 1, dans lequel l'angle aigu de contre-dépouille (B) est dans l'intervalle d'environ 3 à 20 degrés.

3. Ensemble fraise selon la revendication 1 ou la revendication 2, dans lequel la lame de fraise est orientée selon un angle de coupe négatif dans la direction axiale.

4. Ensemble fraise selon la revendication 1 ou la revendication 2, dans lequel la lame de fraise est orientée selon un angle de coupe positif dans la direction radiale.

5. Ensemble fraise selon une quelconque des revendications précédentes, dans lequel ladite lame suivante de la fraise est constituée par une deuxième lame de fraise montée dans le corps de la fraise dans une position relative décalée latéralement par rapport à ladite lame considérée de la fraise.

6. Ensemble fraise (110), comprenant une fraise possédant une pluralité de stations de lames (16) disposées autour de sa périphérie, les stations de lames (16) comprenant une fente de logement de lame (16) définie par une surface de base et une surface arrière (117, 117'), au moins une lame de fraise (18) possédant des faces latérales opposées (18a, 18b) et une pluralité de surfaces de chants périphériques (18d, 18e, 18f, 18g), une (18a) desdites faces latérales coupant une première surface de chant périphérique (18d) pour former une arête tranchante (18h), et l'autre (18b) des faces latérales coupant une deuxième surface de chant périphérique (18e) selon un angle aigu pour former une arête de montage située à l'opposé de l'arête tranchante (18h), ladite lame de fraise (18) étant logée dans la fente de logement de lame (116) de façon que l'autre face latérale (18b) s'appuie contre la surface de base de la fente (116); caractérisé en ce que la surface arrière de la fente est convexe avec la forme générale d'un V, et comprend une surface intérieure de référence (117) et une surface extérieure de référence (117'), la surface intérieure de référence (117) coupant la surface de base selon un angle aigu sensiblement de même valeur que l'angle de l'arête de montage de la lame de fraise (18), la deuxième surface de chant périphérique (18e) étant concave et en forme de V, et comprenant une portion intérieure de chant (18e') et une portion extérieure de chant (18e''), qui se coupent mutuellement selon un angle supérieur à celui de la surface arrière en forme de V (117, 117) de la fente, et la lame étant positionnée de manière que la portion intérieure de chant (18e') bute contre la surface intérieure de référence (117) de la fente, la portion extérieure de chant étant quant à elle espacée de la surface extérieure de référence (117') de la fente.

7. Ensemble fraise selon une quelconque des revendications précédentes, dans lequel la lame de fraise (18) présente une forme plane symétrique, et l'arête de montage définit une deuxième arête tranchante.

8. Ensemble fraise selon une quelconque des revendications précédentes, dans lequel les moyens de retenue de la lame de fraise comprennent une vis qui traverse radialement ladite lame de fraise et est vissée dans le corps de la fraise.

9. Ensemble fraise comprenant: un corps de fraise (12, 112) de configuration généralement cylindrique, qui présente une pluralité de poches (16, 116) de logement des lames, réparties sur le tour de sa périphérie et espacées axialement sur sa longueur: une pluralité de lames analogues (18) logées dans les poches, chaque lame possédant une arête tranchante (18h) orientée dans la direction générale axiale du corps de la fraise, l'arête tranchante présentant des encoches analogues sur sa longueur (19); et les poches (16, 116) étant espacées axialement de manière que les encoches des lames qui se suivent dans une direction circonférentielle soient désalignées les unes par rapport aux autres.

Fig.1.

Fig.2.

Fig.3.

Fig.5.

1

Fig.4.

Fig.8.

Fig.6.

Fig.9.

Fig.7.